# EUROPEAN PATENT APPLICATION

(11) **EP 4 718 528 A1**
(43) Date of publication of application: **01.04.2026**
(21) Application number: 24864739.8
(22) Date of filing: 13.09.2024
(51) Int. Cl.: H01M 4/36, H01M 10/0525, H01M 4/525, H01M 4/505, H01M 4/131, H01M 4/1315, H01M 4/62, C01G 53/00

(54) **POSITIVE ELECTRODE MATERIAL, PREPARATION METHOD THEREFOR, AND USE THEREOF**

(30) Priority: 13.09.2023 CN 202311186638
(71) Applicant: Ningbo Ronbay New Energy Technology Co., Ltd., Yuyao Ningbo, Zhejiang 315402 (CN)
(72) Inventor: DONG, Liangchen, Ningbo, Zhejiang 315402 (CN); ZHANG, Wenxu, Ningbo, Zhejiang 315402 (CN); LIU, Leilei, Ningbo, Zhejiang 315402 (CN); REN, Xiahui, Ningbo, Zhejiang 315402 (CN); CHEN, Yichong, Ningbo, Zhejiang 315402 (CN); CHEN, Yu, Ningbo, Zhejiang 315402 (CN); FENG, Daoyan, Ningbo, Zhejiang 315402 (CN); LIU, Rui, Ningbo, Zhejiang 315402 (CN); LEE, Jonghee, Ningbo, Zhejiang 315402 (CN); YOU, Sangyul, Ningbo, Zhejiang 315402 (CN)
(74) Representative: Bandpay & Greuter
(86) International application number: PCT/CN2024/118752
(87) International publication number: WO 2025/056025

(57) **Abstract**

Provided are a positive electrode material, and a preparation method and a use thereof. The positive electrode material has a Dv50 value of α, with the unit of um, the lithium-rich amount of the positive electrode material is y, and the average porosity of the positive electrode material is denoted as β% in percentage, α, β, and γ satisfying: δ=β-[2α+75γ]/3, where 0≤δ≤4.0. By means of defining the relational expression of the Dv50, the average porosity and the lithium-rich amount of the positive electrode material, a lithium-ion battery prepared by the positive electrode material has excellent specific capacity, energy density, rate capability and cycle performance simultaneously, and particularly can maintain excellent electrochemical properties at high voltage.

## Description

This application claims priority to a Chinese patent application number 202311186638.4, filed with the China National Intellectual Property Administration (CNIPA) on September 13, 2023, and entitled with "POSITIVE ELECTRODE MATERIAL AND PREPARATION METHOD AND USE THEREOF", which is hereby incorporated by reference in its entirety.

### TECHNICAL FIELD

The present application relates to a positive electrode material and a preparation method and use thereof, and belongs to the technical field of lithium-ion batteries.

### BACKGROUND

The property of the positive electrode material directly determines the performance of the lithium-ion battery. The specific capacity, cycle performance, and rate capability of the positive electrode material will directly affect the energy density, service life, and fast charging performance of the lithium-ion battery. Lithium-rich positive electrode material (e.g. layered lithium-rich positive electrode material Li[Li_{1-x-y-z}NiₓCo_{y}Mn_{z}]O₂) has attracted much attention due to its high specific capacity and cost advantages, but its rate performance is worse than that of ternary positive electrode material. Under the industrialization background of increasingly high fast charging requirements, how to improve the rate performance of the lithium-rich positive electrode material is the research focus in this field.

The high specific capacity of the lithium-rich positive electrode material is mainly attributed to the reversible redox process of doped anions and the formation of local electron vacancy on an oxygen atom. In the actual use process, in order to avoid a series of problems caused by extremely high voltage, the application voltage window can be appropriately reduced to provide excellent cycle stability when the capacity is slightly lower, but the rate performance is still at a disadvantage and unable to meet the requirements of high-power density, resulting in limited fast charging performance. That is because anionic redox has a greater impact on the stability of the crystal structure and a slower response than cationic redox. However, compared with the dynamic performance of layered ternary, only cationic redox is utilized to provide capacity. Compared with the ternary positive electrode material, lithium-rich positive electrode material has problems such as high unit-cell volume change rate, serious lattice distortion, and limited dynamic performance, which in turn leads to difficulty in lithium-ion migration, increased polarization, voltage hysteresis and so on, making reduced charge and discharge energy efficiency of the positive electrode material and not able to achieve higher rate performance.

At this stage, the structure, particle size and particle size distribution of secondary particles are mostly adjusted, with the intention of increasing the rate performance of lithium-rich positive electrode materials by improving the dispersibility of lithium-rich positive electrode materials in the positive electrode slurry and shortening the lithium-ion transmission distance. For example, in patent documents CN106340638A, US9478808B2, US10978709B2, and the like, the mentioned methods provide some directions for improving rate performance, but the improvement of rate performance of lithium-rich positive electrode materials needs to be further improved.

### SUMMARY

In a positive electrode material provided in the present application, by defining the relationship expression among Dv50, average porosity and lithium-rich amount of the positive electrode material, the lithium-ion battery prepared by the positive electrode material has excellent specific capacity, energy density, rate performance, and cycle performance, especially can maintain excellent electrochemical performance under high voltage.

The present application also provides a method for preparing the positive electrode material, and the positive electrode material prepared by the method is applied to a lithium-ion battery, so that the lithium-ion battery has excellent specific capacity, rate performance and cycle performance.

The present application also provides a positive electrode sheet including the above described positive electrode material, and thus a lithium-ion battery assembled from the positive electrode sheet has excellent specific capacity, energy density, rate performance, and cycle performance.

The present application also provides a lithium-ion battery including the above described positive electrode sheet, and thus the lithium-ion battery assembled from the positive electrode sheet has both excellent specific capacity, rate performance, and cycle performance. According to a first aspect of the present application, there is provided a positive electrode material, the positive electrode material has a Dv50 value of α, with a unit of µm; the positive electrode material has a lithium-rich amount of γ; an average porosity of the positive electrode material is expressed in percentage as β%, where α, β, and γ satisfy: δ = β - [2α + 75γ]/3, where 0≤ δ≤ 4.0.

For the positive electrode material as described above, the positive electrode material includes a secondary particle and a coating layer covering at least a part of a surface of the secondary particle.

For the positive electrode material as described above, a total molar amount of elements distributed in a cationic form in the secondary particle is A, a total molar amount of elements distributed in an anionic form in the secondary particle is B, and A and B satisfy: 0.985≤A/B≤1.0.

For the positive electrode material as described above, the secondary particle includes a doping metal element distributed in a cationic form, and a doping non-metal element distributed in an anionic form;
where, a molar ratio of the doping metal element to other element distributed in the cationic form in the secondary particle except for a lithium ion is not higher than 5%; and/or
a molar ratio of the doping non-metal element to the sum of elements distributed in the anionic form in the secondary particle is not higher than 10%.

For the positive electrode material as described above, a chemical formula of the secondary particle is Li_{1+x-2y}M_{z}M'_{1-x-z}O_{2-y-t}Rₜ, where M is NiₐCo_{b}Mn_{c}, a+b+c=1.0, 0≤b≤0.10, a≥2b, 1.5≤c/(a+b)≤3.0, x=(c-a)/(2+c-a), 0.985≤(2-2y)/(2-y)≤1.0, (19-19x)/20≤z≤(1-x), and 0 ≤t≤(2-y)/10;
where M' is the doping metal element and R is the doping non-metal element.

For the positive electrode material as described above, the M' includes at least one of Cr, Mo, W, Ta, Nb, P, Sb, Te, Hf, Ce, Ti, Zr, Sn, La, Al, Mg, Fe, K, and Na; and/or,
R includes at least one of F and S.

For the he positive electrode material as described above, the positive electrode material has a Dv50 of 2.5-10.6 µm; and/or,
a minimum particle diameter Dvₘᵢₙ of the positive electrode material is not less than 0.6 µm; and/or,
the secondary particles are formed by agglomeration of primary particles, and an average thickness of the primary particles is 80-250 nm; and/or,
a specific surface area of the secondary particles is not less than 0.5 m²/g and not more than 1.5 m²/g; and/or,
β is 7-13; and/or,
the lithium-rich amount γ is 0.09-0.21.

For the he positive electrode material as described above, a ratio of a molar amount of the coating layer material to the total molar amount of the positive electrode material is (0.2-1.0): 100; and/or,
the coating layer material is phosphate and/or inert oxide; the phosphate includes at least one of AlPO₄ and LaPO₄, the inert oxide includes at least one of Al₂O₃, TiO₂, ZrO₂, and La₂O₃.

According to a second aspect of the present application, there is provided a method for preparing the positive electrode material according to the first aspect, including the following steps:
mixing a metal salt solution, an alkali solution and an oxidant to obtain a reaction system, and making the reaction system undergo precipitation reaction to obtain a precursor; where the oxidant includes sodium hypochlorite, and a concentration of the oxidant in the reaction system is 0.2-2g/L;
mixing the precursor, a lithium salt, and a pore-forming agent to obtain a first mixture, and subjecting the first mixture to a first sintering treatment to obtain the positive electrode material.

For the preparation method as described above, the first mixture further includes a compound containing a doping element; and/or,
after the first sintering treatment, the preparation method further includes: mixing a first sintering treatment product with a coating layer material to obtain a second mixture; and subjecting the second mixture to a second sintering treatment to obtain the positive electrode material.

For the preparation method as described above, a condition of the precipitation reaction is: a stirring speed of 700-800rpm, a temperature of 50-70°C, and pH of 9.5-11.5;
the first sintering treatment has a temperature of 800-950°C and a holding time of 10-15h; and/or
the coating layer material includes inert oxide, and the second sintering treatment has a temperature of 500-800°C, a heating rate of 5-10°C/min, and a holding time of 5-10h; and/or,
the coating layer material includes phosphate, and the second sintering treatment has a temperature of 700-900°C, a heating rate of 5-10°C/min, and a holding time of 5-10h. For the preparation method as described above, a mass of the pore-forming agent is 0.1-1.0wt% of a mass of the precursor;
the pore-forming agent includes at least one of ammonium carbonate, ammonium sulfate, ammonium persulfate, ammonium nitrate, and ammonium chloride.

According to a third aspect of the present application, there is provided a positive electrode sheet including the positive electrode material according to the first aspect or a positive electrode material prepared by the preparation method according to the second aspect.

For the positive electrode sheet as described above, the positive electrode sheet includes a current collector, and a positive electrode active material layer located on at least one functional surface of the current collector;
the positive electrode active material layer includes the positive electrode material, a conductive agent, and a binder, where a ratio of a mass of the positive electrode material to a total mass of the positive electrode active material layer is not less than 94wt%.

According to a fourth aspect of the present application, there is provided a lithium-ion battery including the positive electrode sheet of the third aspect.

For the lithium-ion battery as described above, the lithium-ion battery further includes a separator, a negative electrode sheet, and an electrolyte;
the negative electrode sheet is selected from at least one of a lithium sheet, graphite, and a silicon-carbon negative electrode.

For the lithium-ion battery as described above, an increase rate of average porosity of the positive electrode material on the positive electrode sheet is less than 2% after the lithium-ion battery is cycled under a charge and discharge condition of 2.5-4.5V and 0.5C/1.0C for 200 cycles.

According to a fifth aspect of the present application, there is provided an electrical device including the lithium-ion battery according to the fourth aspect. Preferably, the electrical device includes an electric vehicle, a manned electric aircraft, an unmanned aerial vehicle. The implementation of the present application has at least the following beneficial effects:
the positive electrode material of the lithium-ion battery provided by the present application ensures that the average particle size, the lithium-rich amount and the average porosity of the positive electrode material match mutually by controlling the Dv50 value α, the lithium-rich amount γ and the average porosity β% of the positive electrode material to satisfy δ=β-[2α+75γ]/3 and 0≤δ≤4.0, thereby maximumly improving the specific capacity, rate performance and cycle performance of the lithium-ion battery prepared by the positive electrode material, especially the electrochemical performance under a high voltage condition. In the method for preparing a positive electrode material provided by the present application, by introducing an oxidant and a pore-forming agent and defining the concentration of the oxidant, it is beneficial to controlling the value of Dv50 and the average porosity of the positive electrode material, and a positive electrode material satisfying the relationship δ=β-[2α+75γ]/3 can be prepared. The positive electrode material can be applied to a lithium-ion battery, and thus the lithium-ion battery has excellent specific capacity, rate performance and cycle performance.

### BRIEF DESCRIPTION OF DRAWINGS

FIG. 1 is a cross-sectional SEM diagram at a first magnification of a positive electrode material of Example 1.
FIG. 2 is a cross-sectional SEM diagram at a second magnification of the positive electrode material of Example 1.
FIG. 3 is a cross-section and area division diagram of porosity measurement of a single secondary particle of the positive electrode material of Example 1.
FIG. 4 is a cross-sectional SEM diagram at a first magnification of a positive electrode material of Comparative Example 1.
FIG. 5 is a cross-sectional SEM diagram at a second magnification of the positive electrode material of Comparative Example 1.
FIG. 6 is a cross-section and area division diagram of the porosity measurement of a single secondary particle of the positive electrode material of Comparative Example 1.
FIG. 7 is a cross-sectional SEM diagram at a first magnification of the positive electrode material of Example 2.
FIG. 8 is a cross-sectional SEM diagram at a second magnification of the positive electrode material of Example 2.
FIG. 9 is a cross-section and area division diagram of the porosity measurement of a single secondary particle of the positive electrode material of Example 2.
FIG. 10 is a cross-sectional SEM diagram at a first magnification of a positive electrode material of Comparative Example 2.
FIG. 11 is a cross-sectional SEM diagram at a second magnification of the positive electrode material of Comparative Example 2.
FIG. 12 is a cross-section and area division diagram of a porosity measurement of a single secondary particle of the positive electrode material of Comparative Example 2.
FIG. 13 is a cross-sectional SEM diagram at a first magnification of a positive electrode material of Comparative Example 3.
FIG. 14 is a cross-sectional SEM diagram at a second magnification of the positive electrode material of Comparative Example 3.
FIG. 15 is a cross-section and area division diagram of a porosity measurement of a single secondary particle of the positive electrode material of Comparative Example 3.
FIG. 16 is a cross-sectional SEM diagram of a positive electrode sheet at the first magnification after 200 cycles of a full battery assembled by the positive electrode material of Example 2.
FIG. 17 is a cross-sectional SEM diagram of the positive electrode sheet at the second magnification after 200 cycles of the full battery assembled by the positive electrode material of Example 2.
FIG. 18 is a cross-section and area division diagram of porosity measurement of a single secondary particle in the positive electrode material after 200 cycles of the full battery assembled by the positive electrode material of Example 2.
FIG. 19 is a cross-sectional SEM diagram of the positive electrode sheet at the first magnification after 200 cycles of the full battery assembled by the positive electrode material of Comparative Example 3.
FIG. 20 is a cross-sectional SEM diagram of the positive electrode sheet at the second magnification after 200 cycles of the full battery assembled by the positive electrode material of Comparative Example 3.
FIG. 21 is a cross-section and area division diagram of porosity measurement of a single secondary particle in the positive electrode material after 200 cycles of the full battery assembled by the positive electrode material of Comparative Example 3.

### DESCRIPTION OF EMBODIMENTS

In order to make the purpose, technical solutions, and advantages of the present application clearer, the technical solutions in the embodiments of the present application will be clearly and completely described below in conjunction with the embodiments of the present application; and it is obvious that the described embodiments are part of the embodiments of the present application, but not all the embodiments. Based on the embodiments in the present application, all other embodiments obtained by those skilled in the art without creative work fall within the scope of protection of the present application.

According to a first aspect of the present application, there is provided a positive electrode material, where the Dv50 value of the positive electrode material is α, with the unit of µm; the lithium-rich amount of the positive electrode material is γ; the average porosity of the positive electrode material is expressed in percentage as β%, where α, β, and γ satisfy δ=β-[2α+75γ]/3, and 0≤δ≤4.0.

In the present application, the Dv50 of the positive electrode material refers to a particle size corresponding to 50% of the particle volume distribution of the particles constituting the positive electrode material, and may also be referred to as an average particle size; the lithium-rich amount is defined based on the positive electrode material with a lithium: transition metal ratio>1; that is, in the positive electrode material with a specific chemical formula, the value of the part of lithium subscript exceeding 1 is the lithium-rich amount; the average porosity of the positive electrode material refers to the percentage of the volume of the internal pores of the particles constituting the positive electrode material in the volume of the positive electrode material. When the positive electrode material is composed of secondary particles, the average porosity of the positive electrode material is measured using the following method: calculating the porosity of individual secondary particles in the positive electrode material and taking the average value of the porosity measurements of 20 or more secondary particles in the positive electrode material to obtain the average porosity of the positive electrode material.

In the present application, the specific type of the positive electrode material is not limited, and for example, the positive electrode material may be a lithium-rich positive electrode material. In a lithium-ion battery prepared with the lithium-rich positive electrode material, a part of the specific capacity of the battery is provided by the anionic redox process.

Through research, the inventors found that the average porosity of the positive electrode material has an extremely significant influence on the rate performance of the positive electrode material (especially the lithium-rich positive electrode material), and an appropriate average porosity is the key to the excellent rate performance of the lithium-rich material, and the average porosity should be controlled within a reasonable range. If the average porosity of the positive electrode material is too high, it will lead to a decrease in the structural strength and compaction density of the positive electrode material. In addition, in the early stage of the positive electrode material cycle, when the electrolyte does not completely penetrate into the interior of the positive electrode material, excessive porosity can easily cause the formation of local "island" inside the positive electrode material, which is not conducive to power performance and capacity utilization. Furthermore, as the cycle progress proceeds, more electrolyte contacts the positive electrode material, resulting in serious side reactions and thus reduced battery stability and increased gas production, which is not conducive to industrial application. If the average porosity of the positive electrode material is too low, the tortuosity of the lithium-ion transmission path will be high, and the electrolyte soaking effect will be poor, which will seriously affect the rate performance.

Since the ternary positive electrode material in the prior art has excellent rate performance, it is not necessary to adjust the porosity of the positive electrode material according to the particle size and the transition metal ratio. Considering the particle strength and volume energy density, the porosity of secondary particles in the ternary positive electrode material usually needs to be controlled within 3%. In the relational expression δ=β-[2α+75γ]/3 of the present application, the average porosity value of the positive electrode material is positively correlated with the lithium-rich amount and the value of Dv50, that is, when the lithium-rich amount of the positive electrode material is higher, the average porosity of the corresponding positive electrode material is higher; when the Dv50 of the positive electrode material is higher, the average porosity of the corresponding positive electrode material is higher.

In addition, in the prior art, there are significant differences in the porosity of lithium-rich positive electrode materials, which makes it difficult to comprehensively consider and design power characteristics (rate performance), capacity utilization, structural stability, and energy density, resulting in phenomena such as high capacity utilization but excessive porosity, acceptable power performance but insufficient compaction density, or high compaction density and low porosity but insufficient capacity utilization and poor power performance. However, in the present application, by defining the relationship among the average porosity value, the lithium-rich amount, and the Dv50 value, it is possible to simultaneously improve the rate performance, capacity utilization, structural stability, and energy density of a battery including the above-described positive electrode material. That is because:
on the one hand, the lithium-rich content in the positive electrode material is directly related to the ratio of nickel and manganese transition metal elements in the positive electrode material. Furthermore, the lithium-rich content in the positive electrode material can characterize the proportion of the lithium-rich phase, that is, the proportion of anions used to provide capacity through redox in the positive electrode material. When the lithium-rich amount is higher, the proportion of anion redox that is contributed to the capacity in the positive electrode material is higher, and correspondingly, the unit-cell parameter changes more significantly, and the dynamic performance tends to deteriorate. At this time, the average porosity value of the positive electrode material defined in this application is positively correlated with the lithium-rich amount value. That also means that the positive electrode material of this application has a relatively large average porosity value, which allows the positive electrode material to fully contact the electrolyte, optimizes the lithium-ion transmission path, offsets the loss of dynamics performance caused by the intensified anion redox reaction of the positive electrode material, and maintains the dynamics performance at a high level, thereby ensuring the energy density of the positive electrode sheet and the specific capacity and rate performance of the lithium-ion battery.

On the other hand, the Dv50 of the positive electrode material directly affects the dynamic performance of the positive electrode material. The larger the Dv50, the longer the lithium-ion transport distance. In addition, the contraction and expansion of the particle volume of the positive electrode material during charging and discharging will cause the particles to squeeze each other, tending to form greater internal stress and more grain boundaries, which is not conducive to the continuous migration of lithium-ions. At this time, the average porosity value of the positive electrode material defined in this application and the Dv50 value have the above mentioned positive correlation relationship, which means that the positive electrode material of this application has a relatively large average porosity value and thus can reduce internal stress, avoid secondary particle fragmentation, and prevent lithium-ions from migration difficulties caused by increased stress, offsetting the polarization intensification caused by the increased lithium-ion transport distance of the positive electrode material, thereby ensuring the cycle performance and rate performance of the lithium-ion battery. When the positive electrode material of the present application is a layered lithium-rich positive electrode material, the positive electrode material has a layered structure, and at this time, in some embodiments, the positive electrode material includes secondary particles and a coating layer covering at least a part of the surface of the secondary particles. Where, the secondary particle is obtained by aggregating a plurality of primary particles, and the secondary particle has a spherical or approximately spherical shape, such as spheroidicity. The coating layer can reduce the side reaction between the positive electrode material and the electrolyte, and inhibit the degradation of the surface structure of the positive electrode material, the dissolution of transition metals in secondary particles and the deactivation of the electrolyte, thereby improving the stability of the positive electrode material, and especially ensuring the stability of the positive electrode material in high voltage system.

In the prior art, the ratio of the total anions to the total cations in the ternary positive electrode material is 1, but for the lithium-rich positive electrode material, the surface structure may change during the coating process. The corrosive effect of some acidic substances will cause Li₂O to be released from the surface layer of secondary particles, resulting in a ratio of total anions to total cations less than 1. However, excessive release of Li₂O will cause the positive electrode material structure to collapse, resulting in a significant decrease in battery capacity and stability. Therefore, in some embodiments, the total molar amount of the elements distributed in the cationic form in the secondary particles is A, the total molar amount of the elements distributed in the anionic form in the secondary particles is B, and A and B satisfy: 0.985≤A/B≤1.0; that is, the lithium-ion release ratio is limited to be not more than 6%, ensuring that the bulk structure stability of the secondary particles is not destroyed while the coating layer improves the interface stability of the positive electrode material.

Taking the layered lithium-rich positive electrode material as an example, in addition to Li, Ni, Co, and Mn, other metal elements distributed in cationic form and non-metal elements distributed in cationic form can also be doped to meet the needs of industrialization and diversification performance. In some embodiments, the secondary particle includes a doping metal element distributed in a cationic form, a doping non-metal element distributed in an anionic form; where, the molar ratio of the doping metal element to other element distributed in the cationic form in the secondary particle except for a lithium ion is not higher than 5%. The other element distributed in the cationic form in the secondary particle except for the lithium ion includes Ni, Co, Mn, and a doping metal element; and in this case, the molar amount of the doping metal element/the total molar amount of Ni, Co, Mn, and the doping metal element ×100%≤5%. Continuing with the layered lithium-rich positive electrode material as an example, in some embodiments, the molar ratio of the doping non-metal element to the sum of the elements distributed in the anionic form in the secondary particle is not higher than 10%. The sum of the elements distributed in the anionic form in the secondary particle includes O and the doping non-metal element; and in this case, the molar amount of the doping non-metal element/the total molar amount of O and the doping non-metal element ×100%≤10%. By defining the amount of the doping metal element and the doping non-metal element, the performance of specific aspects of the positive electrode material can be improved to varying degrees, and the imbalance of product performance caused by excessive doping can also be avoided.

In the present application, the chemical formula of the secondary particle is Li_{1+x-2y}M_{z}M'_{1-x-z}O_{2-y-t}Rₜ, where M is NiₐCo_{b}Mn_{c}, a+b+c=1.0, 0≤b≤0.10, a≥2b, 1.5≤c/(a+b)≤3.0, x=(c-a)/(2+c-a), 0.985≤(2-2y)/(2-y)≤1.0, (19-19x)/20≤z≤(1-x), 0≤t≤(2-y)/10; where M' is a doping metal element and R is a doping non-metal element.

By defining 0.985≤(2-2y)/(2-y)≤1.0, it is advantageous to realize that the ratio of the total molar amount A of the elements distributed in the cationic form to the total molar amount B of the elements distributed in the anionic form in the secondary particle satisfies 0.985≤A/B≤1.0; by defining (19-19x)/20≤z≤(1-x), it is advantageous to realize that the molar ratio of the doping metal element to other element distributed in the form of cation except for the lithium ion in the secondary particle is not higher than 5%; by defining 0≤t≤(2-y)/10, it is advantageous to achieve the molar amount of the doping non-metal element/the total molar amount of O and the doping non-metal element × 100% ≤ 10%.

In the chemical formula of the secondary particle, the lithium-rich amount γ of the positive electrode material may be x-2y. By defining x=(c-a)/(2+c-a), at this time, the lithium-rich amount is directly related to the molar ratio of nickel and manganese elements, that is to say, the lithium ratio of the positive electrode material is directly related to the ratio of transition metal elements; an appropriate lithium ratio can ensure that the material achieves its maximum electrochemical performance. Specifically, according to the relative molar amount of nickel and manganese elements, the lithium content is adjusted so that all elements distributed in cationic form are at a stable valence, especially making Mn element valence closer to +4, and minimizing the impact of the Jahn-Teller effect on structural stability, thereby making the performance of positive electrode material in an optimum range. If the lithium ratio is too high, it will easily lead to excessive growth of positive electrode material particles, severely reducing the activity of Li₂MnO₃ in the positive electrode material, and increasing the valence of nickel, further resulting in decreased power performance and limited capacity utilization. However, the positive electrode material provided in the present application satisfies the above described relationship and has a reasonable lithium-rich amount, which can maintain the rate performance, capacity utilization, and cycle stability of the positive electrode material at the maximum level simultaneously.

The addition proportion of nickel increases the energy density of the lithium-ion battery; the addition proportion of cobalt can stabilize the layered structure of the positive electrode material, improve the cycle times and rate performance of the lithium-ion battery prepared by it, and reduce the impact on the specific capacity of the lithium-ion battery; the addition proportion of manganese not only improves the structural stability of the positive electrode material and the safety of the lithium-ion battery prepared by it, but also reduces the material cost of the lithium-ion battery and its influence on specific capacity. Therefore, by selecting the composition ratio of nickel, cobalt, and manganese in the secondary particle of the positive electrode material, the energy density, cycle performance, and rate performance of the lithium-ion battery prepared from the positive electrode material are taken into account. When 0≤b≤0.10 and a≥2b are satisfied, the molar ratio of nickel element is higher than twice the molar ratio of cobalt element, and the molar ratio of cobalt element does not exceed 10%. On the one hand, controlling the proportion of the cobalt element can reduce material cost. On the other hand, compared with the nickel element, an increase in cobalt element content can slightly improve the capacity utilization of the positive electrode material. However, at the same time, due to the fact that the upper limit of the application voltage window of the layered lithium-rich positive electrode material is higher than that of the ternary positive electrode material, the main reason for the capacity increase brought by the cobalt element in the layered lithium-rich positive electrode material is that cobalt can catalyze and improve the activity of the lithium-rich phase. Therefore, an increase in the cobalt element content will result in a slight decrease in the structural stability of the layered lithium-rich positive electrode material due to a higher degree of anion oxidation-reduction. Similarly, the power performance will also decrease slightly. The cycling stability of the layered lithium-rich positive electrode material in a cobalt-free system is not lower than that of the layered lithium-rich positive electrode material in a cobalt-containing system. However, due to the lack of catalytic activation by cobalt, the initial polarization of the positive electrode material is relatively high. There will be continuous activation of Li₂MnO₃ in the early stage of cycling, leading to the disadvantage of a continuous increase in the overall capacity of the positive electrode material, which poses a challenge to the design of the battery cell BMS. However, the present application can avoid this phenomenon by controlling the cobalt content, thereby reducing the design costs at a late stage. Therefore, the above mentioned positive electrode material provided in the present application can effectively balance the above advantages and disadvantages; and by defining the ratio of transition metals, key indicators such as cost, rate performance, capacity utilization, and structural stability of the positive electrode material are balanced, so as to ensure that the overall performance of the positive electrode material is excellent and the positive electrode material is more in line with industrial performance requirements.

When 1.5≤c/(a+b)≤3.0 is satisfied, the molar ratio of manganese element is not less than 1.5 times the sum of the molar ratios of nickel and manganese elements, which can ensure that the watt-hour cost of the positive electrode material is lower than that of other ternary positive electrode materials. At the same time, the molar amount of manganese element is not higher than 3 times the sum of the molar amounts of nickel and manganese elements, so that the upper limit of the proportion of lithium-rich phase in the positive electrode material can be controlled. In actual application, the capacity utilization is not in direct proportion to the proportion of lithium-rich phase. When the proportion of the lithium-rich phase increases to a certain limit, further increasing its proportion will significantly slow down the increase in capacity due to increased material polarization, and even cause a decrease in capacity in a high density system. Additionally, manganese element tends to undergo disproportionation reaction and be dissolved into the electrolyte during long term cycling, migrating to the negative electrode under the influence of an electric field, and causing the negative electrode deactivation. In addition, the molar ratio of manganese element is too high, that is, the proportion of the lithium-rich phase is too high, which will lead to a decrease in the structural stability of the positive electrode material. In batteries assembled from this positive electrode material, the disadvantage caused is that the energy of the battery cell decays rapidly, which cannot meet the needs of industrialization. Therefore, when 1.5≤c/(a+b)≤3.0 is satisfied, the battery system can have higher cost performance.

The present application does not limit the specific types of the doping metal element M' and the doping non-metal element R, which may be adjusted according to actual needs. For example, in some embodiments, M' includes at least one of Cr, Mo, W, Ta, Nb, P, Sb, Te, Hf, Ce, Ti, Zr, Sn, La, Al, Mg, Fe, K, and Na; and/or R includes at least one of F, and S. Specifically, the above doping metal element may be distributed in the secondary particle in the form of Cr⁶⁺, Mo⁶⁺, W⁶⁺, Ta⁵⁺, Nb⁵⁺, P⁵⁺, Sb⁵⁺, Te⁴⁺, Hf⁴⁺, Ce⁴⁺, Ti⁴⁺, Zr⁴⁺, Sn⁴⁺, La³⁺, Al³⁺, Mg²⁺, Fe²⁺, K⁺, and Na⁺; the above mentioned doping non-metal element may be distributed in the secondary particle in the form of F⁻, and S²⁻.

Where, when the doping metal element is Mo, W, Ta, Nb, and Sb, the distribution in the form of high valent cation of Mo⁶⁺, W⁶⁺, Ta⁵⁺, Nb⁵⁺, or Sb⁵⁺ helps to regulate the particle size of the primary particles of the positive electrode material. As the concentration of the above mentioned doping element in the form of high valent cation increases, under the same sintering condition, the smaller the particle size of the primary particles of the positive electrode material, the smaller the internal stress, and the capacity utilization will be improved; secondary particles are also less prone to cracking during cycling, which is conducive to improving cycling performance and safety performance. When the doping metal element is P, P⁵⁺ tends to form phosphate radicals in the sub-surface layer of the positive electrode material (i.e., the surface of the secondary particle), improving the stability of the anion framework and extending the service life of the positive electrode material. When the doping metal element is Cr, Te, Hf, Ti, Zr, Sn, La, Al, Mg, Fe, K, and Na, Cr⁶⁺, Te⁴⁺, Hf⁴⁺, Ti⁴⁺, Zr⁴⁺, Sn⁴⁺, La³⁺, Al³⁺, Mg²⁺, Fe²⁺, K⁺, and Na⁺ can increase the stability of the alkali metal layer (i.e., the lithium layer) or the transition metal layer (i.e., the nickel cobalt manganese layer), suppress irreversible cation migration and stabilize the bulk phase structure. When the doping non-metal element is F, F⁻ has stronger electronegativity and can form stronger covalent bond with cation, improving the structural stability of the positive electrode material. When the doping non-metal element is S, S²⁻ doping can stabilize the anion framework; S²⁻ can serve as a buffering site for oxygen anion redox to some extent, improving the reversibility of oxygen anion redox, which is beneficial for capacity utilization and rate performance enhancement. In some embodiments, the positive electrode material has a Dv50 of 2.5-10.6 µm; and/or the minimum particle diameter Dvₘᵢₙ of the positive electrode material is not less than 0.6 µm, so as to control the positive electrode material to be free of micro powder, avoid serious interface side reactions and cycle gas production, and help improve the cycle performance and safety performance of the battery assembled by the positive electrode sheet. In order to further improve the safety performance of the battery, in some embodiments, the secondary particle is formed by agglomerating primary particles, and the average thickness of the primary particles is 80-250 nm; the specific surface area of the secondary particle is not less than 0.5 m²/g and not more than 1.5 m²/g. By defining the average thickness of the primary particles and the specific surface area of the secondary particle, it is possible to ensure that the contact area between the positive electrode material and the electrolyte is limited and sufficient to fully exert the power performance.

In the prior art, the capacity and the first efficiency of the lithium-rich positive electrode material tend to be improved by means of surface acid corrosion and so on, such as forming a layer of spinel-like structure on the surface of the positive electrode material to improve the surface lithium-ion conductivity. However, after such treatment of the positive electrode material, on the one hand, many fresh interfaces will be formed, and the voids between particles will also be significantly increased, so the specific surface area is usually 2.0 m²/g or more, even 3.0 m²/g or more. The increase in the specific surface area and fresh interface will inevitably lead to the intensification of interface side reactions. However, the specific surface area of the secondary particle of the present application is not less than 0.5 m²/g and not more than 1.5 m²/g, ensuring that the positive electrode material has specific pore and ensuring the power performance and capacity utilization of the positive electrode material, that is, it can allow the performance of the positive electrode material to be fully exerted.

In the prior art, compared with the ternary positive electrode material, the lithium-rich positive electrode material has a greater lattice stress during the point chemical reaction process, and its dynamic performance tends to be slightly lower. In the positive electrode material of the present application, the average thickness of the primary particles is 80-250 nm, which ensures that the internal stress of a single particle is low, so that lithium-ions can be smoothly intercalated and deintercalated, and the performance of the positive electrode material can be fully exerted. If the average thickness of primary particles is greater than 250 nm, it will lead to dynamics problems caused by excessive thickness, which in turn affects power performance and capacity utilization. If the average thickness of primary particles is less than 80 nm, it will lead to a rapid decrease in compaction density and particle strength due to too low thickness, and the specific surface area will increase significantly.

The present application does not limit the specific values of the lithium-rich amount γ and the average porosity β% of the positive electrode material, as long as the above described relational expressions are satisfied. For example, in some embodiments, β is 7-13; and/or the lithium-rich amount γ is 0.09-0.21.

The present application does not limit the specific material and size of the coating layer. For example, in some embodiments, the thickness of the coating layer is 2-10 nm; and/or the ratio of the total molar amount of the coating layer material to the total molar amount of the positive electrode material is the thickness is (0.2-1.0):100; and/or the coating material is a phosphate and/or an inert oxide; the phosphate includes at least one of AlPO₄, and LiNiPO₄, and the inert oxide includes at least one of Al₂O₃, TiO₂, ZrO₂, and La₂O₃. By coating with the inert oxide or/and phosphate coating layer, the positive electrode material can be adapted to a high voltage window. Compared with the ternary positive electrode material, the positive electrode material of the present application can maintain higher stability at a higher voltage window, so as to meet industrialization requirements.

In a second aspect of the present application, there is provided a method for preparing a positive electrode material according to the first aspect, including the following steps:
mixing a metal salt solution, an alkali solution, and an oxidant to obtain a reaction system, and making the reaction system undergo precipitation reaction to obtain a precursor, where the oxidant includes sodium hypochlorite, and the concentration of the oxidant in the reaction system is 0.2-2 g/L;
mixing the precursor, a lithium salt, and a pore-forming agent to obtain a first mixture, and subjecting the first mixture to a first sintering treatment to obtain the positive electrode material.

Where, the metal salt solution may be a metal sulfate solution, and the concentration of the metal sulfate is 2-3 mol/L; the alkali solution may be sodium hydroxide, and the concentration of sodium hydroxide is 5-10 mol/L.

In the prior art, in the process of synthesizing the precursor of the ternary positive electrode material, the oxygen content is required to be extremely low, otherwise, the morphology of the precursor will be irregular and agglomerated, the crystal structure will change, and the heterogeneous phase will appear. After research, the inventors believe that the concentration of the oxidant will directly affect the density of the precursor, and thus affect the porosity of the positive electrode material. This is because the concentration of the oxidant affects the dynamic characteristics of the precipitation reaction. In the present application, by adjusting the concentration of the oxidant, some elements in the reaction system are oxidized, some elements nucleate and grow separately, and the transition metal is restricted from continuing to bond and grow on the surface of the original primary particles to make the thickness of the primary particles too large, so as to control the density of the precursor and control the particle size and porosity of the subsequently formed secondary particles, thereby facilitating the control of the Dv50 value and the average porosity of the final positive electrode material. It should be noted that the concentration of sodium hypochlorite has a negative correlation with the particle size of the target secondary particle, that is, the higher the concentration of sodium hypochlorite, the smaller the particle size of the target secondary particle; the lower the concentration of the sodium hypochlorite, the larger the particle size of the target secondary particle. The concentration of sodium hypochlorite is positively correlated with the proportion of manganese atom in the precursor. This is because: the higher the proportion of manganese element, the higher the proportion of the manganese-rich phase in the final positive electrode material. Therefore, the porosity needs to be increased, that is, the amount of sodium hypochlorite needs to be increased correspondingly. Therefore, the concentration of sodium hypochlorite is positively correlated with the proportion of manganese element. That is, as the proportion of manganese element in nickel, cobalt and manganese elements increases, the amount of sodium hypochlorite needs to be increased correspondingly.

The present application further regulates the average porosity of the target positive electrode material by using the pore-forming agent. After thoroughly mixing the precursor, the lithium salt, a compound containing a doping element, and the pore-forming agent, the first sintering treatment is performed. During the first sintering treatment, the pore-forming agent begins to decompose and generate gas at a temperature below 400°C, which is prior to or accompanied by the lithiation of the oxide produced by the decomposition of the hydroxide precursor into an ordered and layered lithium-rich positive electrode material. Therefore, during the process of the transition metal oxide being lithiated into the lithium-rich positive electrode material, the pore-forming agent will continuously release a certain amount of gas to achieve the purpose of preparing the positive electrode material with a specific average porosity. The above mentioned method provided by this application can achieve a highly controllable average porosity of the positive electrode material, and correspondingly, it can maximize its power performance. At the same time, sufficient unit-cell "breathing" space can effectively improve the stability of the crystal structure, ensure the structural strength of the secondary particle, reduce the volume change rate and pore change rate of the secondary particle, and extend the long cycle life of the positive electrode material in the battery, providing a guarantee for stable use in large scale battery cells.

In some embodiments, the first mixture also includes a compound containing a doping element to form a coating layer during the second sintering process, where the compound containing a doping element includes a compound containing a doping metal element and a compound containing a doping non-metal element; and/or, after the first sintering treatment, the following is further included: mixing the first sintering treatment product with the coating layer material to obtain a second mixture; and subjecting the second mixture to a second sintering treatment to obtain the positive electrode material. A coating layer is formed on the surface of the secondary particle by the second sintering treatment, which reduces the side reaction between the positive electrode material and the electrolyte and improves the stability of the battery system.

The present application does not limit the parameters of the above preparation process too much. For example, in some embodiments, the conditions of the precipitation reaction are: a stirring speed of 700-800 rpm, a temperature of 50-70 °C, pH of 9.5-11.5; the temperature of the first sintering treatment is 800-950 °C, and the holding time is 10-15h.

When the coating layer material includes only the inert oxide, the temperature of the second sintering treatment is 500-800 °C, the heating rate is 5-10 °C/min, and the time is 5-10h; when the coating layer material includes only phosphate, the temperature of the second sintering treatment is 700-900 °C, the heating rate is 5-10 °C/min, and the time is 5-10 h. Where, the first sintering treatment is performed under an air atmosphere. When the coating layer material includes both inert oxide and phosphate, the temperature of the second sintering treatment is 700-800 °C, the heating rate is 5-10 °C/min, and the time is 5-10h.

The present application does not limit the specific type and addition amount of the pore-forming agent, and the pore-forming agent may be a heat-gasifiable ammonium salt of coordinated polyanion. For example, in some embodiments, the mass of the pore-forming agent is 0.1-1.0 wt% of the mass of the precursor; the pore-forming agent includes at least one of ammonium carbonate, ammonium sulfate, ammonium persulfate, ammonium nitrate, and ammonium chloride.

It should be noted that in the above described preparation process, it is usually necessary to add an excessive amount of lithium, that is, in addition to satisfying the molar ratio of lithium in the chemical formula, it is necessary to additionally add 3-5 at% of lithium to avoid loss of lithium in the preparation process. In the specific implementation process of the present application, the actual molar amount of lithium salt/theoretical molar amount of lithium = 1.03-1.05, where the theoretical molar amount of lithium is the addition amount of lithium salt satisfying the chemical formula.

According to a third aspect of the present application, there is provided a positive electrode sheet including the positive electrode material according to the first aspect or the positive electrode material prepared by the preparation method according to the second aspect.

In some embodiments, the positive electrode sheet includes a current collector, and a positive electrode active material layer located on at least one functional surface of the current collector; the positive electrode active material layer includes the positive electrode material, a conductive agent, and a binder. Where, the ratio of the mass of the positive electrode material to the total mass of the positive electrode active material layer is not less than 94 wt%.

The positive electrode sheet of the present application can also be prepared by conventional technical means in the art. Specifically, the positive electrode material, the conductive agent, and the binder can be uniformly dispersed in a solvent to obtain a positive electrode active layer slurry, and then the positive electrode active layer slurry can be coated on at least one functional surface of the positive electrode current collector, and the positive electrode sheet of the present application can be obtained after drying.

The present application does not make specific restrictions on the specific category of the conductive agent and binder. The conductive agent, the binder, and other components may be selected from conventional materials in the field. For example, the conductive agent may be selected from one or more of conductive carbon black, carbon nanotubes, conductive graphite, or graphene, while the binder may be selected from one or more of polyvinylidene fluoride (PVDF), acrylic-modified PVDF, polyacrylate polymers, polyimide, styrene-butadiene rubber, or styrene-propylene rubber.

In the present application, the coating method is not particularly limited, and the positive electrode active layer slurry can be applied by any one of the coating methods such as gravure coating, extrusion coating, spray coating, and screen printing.

According to a fourth aspect of the present application, there is provided a lithium-ion battery including the positive electrode sheet provided in the third aspect.

In addition to the positive electrode sheet, in some embodiments, the lithium-ion battery of the present application further includes a separator, a negative electrode sheet, and an electrolyte. Where, the composition of the negative electrode sheet can refer to a conventional negative electrode sheet in the art, and the separator can also adopt a separator conventionally used in the art, such as a PP film and a PE film. The negative electrode sheet is selected from at least one of a lithium sheet, a graphite, and a silicon-carbon negative electrode.

The lithium-ion battery of the present application can be prepared by a conventional method in the art. Specifically, the positive electrode sheet, the separator and the negative electrode sheet can be stacked in sequence and placed, followed by a lamination or winding process to obtain a battery cell; and then the battery cell is subjected to baking, electrolyte injection, formation, packaging, and other procedure to obtain the above lithium-ion battery.

Taking the negative electrode sheet being a metal lithium sheet as an example, in some embodiments, the increase rate of average porosity of the positive electrode material on the positive electrode sheet is less than 2% after the lithium-ion battery is cycled under charge-discharge condition of 2.5-4.5 V and 0.5C/1.0C for 200 cycles.

According to a fifth aspect of the present application, there is provided an electrical device including the lithium-ion battery according to the fourth aspect, preferably, the electrical device includes an electric vehicle, a manned electric aircraft, or an unmanned aerial vehicle. The present application will be further described below with reference to specific Examples and Comparative Examples.

### Example 1

(1) A metal salt solution, sodium hydroxide solution, and sodium hypochlorite are introduced into a reaction vessel at rates of 10 mL/min, 8.0±0.2 mL/min, and 0.009 g/min, respectively; and stirred at a speed of 800 rpm, at a temperature of 50°C, with a pH of 10.6; and reacted for a certain time, obtaining a precursor with a qualified particle size of 6-8 µm. Where, the metal salt solution is a sulfate solution containing nickel and manganese (the molar ratio of nickel to manganese is 35:65), with a metal salt concentration of 2 mol/L; the sodium hydroxide solution has a sodium hydroxide concentration of 5 mol/L; the sodium hypochlorite concentration in the reaction system is 0.5 g/L.
(2) The precursor Ni_{0.35}Mn_{0.65}(OH)₂ and lithium salt Li₂CO₃ are added at 1.0 mol and 0.67 mol (3 at% excess based on 0.65 mol), respectively; and ammonium sulfate (the mass of ammonium sulfate is 0.6% of the mass of the precursor) is added and mixed thoroughly to obtain a first mixture. The first mixture is subjected to a first sintering treatment under an air atmosphere at a temperature of 900°C for 12 hours, and then cooled naturally to room temperature to obtain the positive electrode material Li_{1.13}Ni_{0.305}Mn_{0.565}O₂.

### Example 2

The preparation process in this Example is generally consistent with that of Example 1, except that in step (1), "the sodium hypochlorite concentration in the reaction system is 0.5 g/L" is replaced with "the sodium hypochlorite concentration in the reaction system is 0.8 g/L", and other conditions remain unchanged, thereby obtaining the precursor; in step (2), the precursor of Example 1 is replaced with the precursor of this Example, "ammonium sulfate" is replaced with "ammonium carbonate", "the mass of ammonium sulfate is 0.6% of the mass of the precursor" is replaced with "the mass of ammonium carbonate is 0.2% of the mass of the precursor", and other conditions remain unchanged, obtaining the positive electrode material Li_{1.131}Ni_{0.302}Mn_{0.567}O₂.

### Example 3

The preparation process in this Example is generally consistent with that of Example 1, except that in step (1), "the sodium hypochlorite concentration in the reaction system is 0.5 g/L" is replaced with "the sodium hypochlorite concentration in the reaction system is 1.5 g/L", and other conditions remain unchanged, thereby obtaining the precursor; in step (2), the precursor of Example 1 is replaced with the precursor of this Example; "ammonium sulfate" is replaced with "ammonium nitrate"; "the mass of ammonium sulfate is 0.6% of the mass of the precursor" is replaced with "the mass of ammonium nitrate is 0.5% of the mass of the precursor", and other conditions remain unchanged, obtaining the positive electrode material Li_{1.13}Ni_{0.308}Mn_{0.562}O₂.

### Example 4

The preparation process in this Example is generally consistent with that of Example 1, except that in step (1) "the metal salt solution is a sulfate solution containing nickel and manganese (the molar ratio of nickel to manganese is 35:65)" is replaced with "the metal salt solution is a sulfate solution containing nickel and manganese (the molar ratio of nickel to manganese is 25:75)", "the sodium hypochlorite concentration in the reaction system is 0.5 g/L" is replaced with "the sodium hypochlorite concentration in the reaction system is 1.5 g/L", and other conditions remain unchanged to obtain a precursor; in step (2), the precursor of Example 1 is replaced with the precursor of this Example; "ammonium sulfate" is replaced with "ammonium carbonate"; "the mass of ammonium sulfate is 0.6% of the mass of the precursor" is replaced with "the mass of ammonium carbonate is 0.2% of the mass of the precursor", and other conditions remain unchanged, obtaining the positive electrode material Li_{1.203}Ni_{0.2}Mn_{0.597}O₂.

### Example 5

The preparation process in this Example is generally consistent with that of Example 1, except that in step (1) "the metal salt solution is a sulfate solution containing nickel and manganese (the molar ratio of nickel to manganese is 35:65)" is replaced with "the metal salt solution is a sulfate solution containing nickel and manganese (the molar ratio of nickel to manganese is 40:60)"; "the sodium hypochlorite concentration in the reaction system is 0.5 g/L" is replaced with "the sodium hypochlorite concentration in the reaction system is 1.3 g/L", and other conditions remain unchanged to obtain a precursor; in step (2), the precursor of Example 1 is replaced with the precursor of this Example; "ammonium sulfate" is replaced with "ammonium chloride"; "the mass of ammonium sulfate is 0.6% of the mass of the precursor" is replaced with "the mass of ammonium chloride is 0.8% of the mass of the precursor", and other conditions remain unchanged, obtaining the positive electrode material Li_{1.091}Ni_{0.365}Mn_{0.544}O₂.

### Example 6

The preparation process in this Example is generally consistent with that of Example 1, except that in step (1) "the metal salt solution is a sulfate solution containing nickel and manganese (the molar ratio of nickel to manganese is 35:65)" is replaced with "the metal salt solution is a sulfate solution containing nickel, cobalt, and manganese (the molar ratio of nickel, cobalt, and manganese is 30:10:60)"; "the sodium hypochlorite concentration in the reaction system is 0.5 g/L" is replaced with "the sodium hypochlorite concentration in the reaction system is 1.2 g/L", and other conditions remain unchanged to obtain a precursor; in step (2), the precursor of Example 1 is replaced with the precursor of this Example, "ammonium sulfate" is replaced with "ammonium persulfate", "the mass of ammonium sulfate is 0.6% of the mass of the precursor" is replaced with "the mass of ammonium persulfate is 0.3% of the mass of the precursor", and other conditions remain unchanged, obtaining the positive electrode material Li_{1.313}Ni_{0.262}Co_{0.087}Mn_{0.52}O₂.

### Example 7

The preparation process in this Example is generally consistent with that of Example 1, except that in step (1) "the sodium hypochlorite concentration in the reaction system is 0.5 g/L" is replaced with "the sodium hypochlorite concentration in the reaction system is 1.0 g/L", and other conditions remain unchanged to obtain a precursor; in step (2), the precursor of Example 1 is replaced with the precursor of this Example; "ammonium sulfate" is replaced with "ammonium chloride"; "the mass of ammonium sulfate is 0.6% of the mass of the precursor" is replaced with "the mass of ammonium chloride is 0.5% of the mass of the precursor", and the compounds containing a doping element WO₃, Nb₂O₅, Al₂O₃, and NH₄H₂PO₄ are added to the first mixture, where the ratios of the atomic weights of W, Nb, Al, and P elements to the atomic weight of nickel element in the precursor are 1:29.2, 1:29.2, 1:29.2, and 1:29.2, respectively, and other conditions remain unchanged, obtaining the positive electrode material Li_{1.13}Ni_{0.292}Mn_{0.548}W_{0.01}Nb_{0.01}Al_{0.01}P_{0.01}O₂.

### Example 8

The preparation process in this Example is generally consistent with that of Example 1, except that in step (1) "the sodium hypochlorite concentration in the reaction system is 0.5 g/L" is replaced with "the sodium hypochlorite concentration in the reaction system is 0.9 g/L", and other conditions remain unchanged to obtain a precursor; in step (2), the precursor of Example 1 is replaced with the precursor of this Example; "ammonium sulfate" is replaced with "ammonium nitrate"; "the mass of ammonium sulfate is 0.6% of the mass of the precursor" is replaced with "the mass of ammonium nitrate is 0.5% of the mass of the precursor", and the compounds containing a doping element WO₃, Nb₂O₅, Al₂O₃, and NH₄H₂PO₄ are added to the first mixture, where the ratios of the atomic weights of W, Nb, Al, and P elements to the atomic weight of nickel element in the precursor are 1:29.2, 1:29.2, 1:29.2, and 1:29.2, respectively, and other conditions remain unchanged, obtaining the first sintering treatment product Li_{1.13}Ni_{0.292}Mn_{0.548}W_{0.01}Nb_{0.01}Al_{0.01}P_{0.01}O₂;
the step (3) is added: mixing the first sintering treatment product with 0.03 mol% Al₂O₃ and 0.02 mol% TiO₂ to obtain a second mixture; subjecting the second mixture to a second sintering treatment at 550°C under an air atmosphere for 10 hours, obtaining a lithium-rich positive electrode material coated with Al₂O₃ and TiO₂ as a composite, 0.03Al₂O₃·0.02TiO₂·Li_{1.13}Ni_{0.292}Mn_{1.548}W_{0.01}Nb_{0.01}Al_{0.01}P_{0.01}O₂.

### Example 9

The preparation process in this Example is generally consistent with that of Example 1, except that in step (1) "the sodium hypochlorite concentration in the reaction system is 0.5 g/L" is replaced with "the sodium hypochlorite concentration in the reaction system is 0.9 g/L", and other conditions remain unchanged to obtain a precursor; in step (2), the precursor of Example 1 is replaced with the precursor of this Example; "ammonium sulfate" is replaced with "ammonium carbonate"; "the mass of ammonium sulfate is 0.6% of the mass of the precursor" is replaced with "the mass of ammonium carbonate is 0.6% of the mass of the precursor"; the amount of Li₂CO₃ is reduced from 0.67 mol (0.65 mol with a 3 at% excess) to 0.492 mol (0.477 mol with a 3 at% excess), and the compounds containing a doping element WO₃, Nb₂O₅, Al₂O₃, NH₄H₂PO₄, LiF, and Li₂S are added to the first mixture, where the ratios of the atomic weights of W, Nb, Al, P, F, and S elements to the atomic weight of nickel element in the precursor are 1:29.4, 1:29.4, 1:29.4, 1:29.4, 1:2.94, and 1:2.94, respectively; and other conditions remain unchanged, obtaining the positive electrode material Li_{1.129}Ni_{0.294}Mn_{0.547}W_{0.01}Nb_{0.01}Al_{0.01}P_{0.01}O_{1.8}F_{0.1}S_{0.1}.

### Example 10

The preparation process in this Example is generally consistent with that of Example 1, except that in step (1) "the sodium hypochlorite concentration in the reaction system is 0.5 g/L" is replaced with "the sodium hypochlorite concentration in the reaction system is 0.9 g/L", and other conditions remain unchanged to obtain a precursor; in step (2), the precursor of Example 1 is replaced with the precursor of this Example; "ammonium sulfate" is replaced with "ammonium carbonate"; "the mass of ammonium sulfate is 0.6% of the mass of the precursor" is replaced with "the mass of ammonium carbonate is 0.7% of the mass of the precursor"; the amount of Li₂CO₃ is reduced from 0.67 mol (0.65 mol with a 3 at% excess) to 0.492 mol (0.477 mol with a 3 at% excess), and the compounds containing a doping element WO₃, Nb₂O₅, Al₂O₃, NH₄H₂PO₄, LiF, and Li₂S are added to the first mixture, where the ratios of the atomic weights of W, Nb, Al, P, F, and S elements to the atomic weight of nickel element in the precursor are 1:29.4, 1:29.4, 1:29.4, 1:29.4, 1:2.94, and 1:2.94, respectively; and other conditions remain unchanged, obtaining the first sintering treatment product Li_{1.129}Ni_{0.294}Mn_{0.547}W_{0.01}Nb_{0.01}Al_{0.01}P_{0.01}O_{1.8}F_{0.1}S_{0.13}
the step (3) is added: mixing the first sintering treatment product with 0.03 mol% Al₂O₃ and 0.03 mol% AlPO₄ to obtain a second mixture; subjecting the second mixture to a second sintering process at 550°C under an air atmosphere for 10 hours, obtaining a positive electrode material (0.03Al₂O₃·0.03 AlPO₄·Li_{1.13}Ni_{0.292}Mn_{0.54}W_{0.01}Nb_{0.01}Al_{0.01}P_{0.01}O₂).

### Comparative Example 1

The preparation process in this Comparative Example is generally consistent with that of Example 1, except that in step (1), the "the sodium hypochlorite concentration in the reaction system is 0.5 g/L" is replaced with "the sodium hypochlorite concentration in the reaction system is 2.5 g/L", and other conditions remain unchanged, thereby obtaining the precursor; in step (2), the precursor of Example 1 is replaced with the precursor of this Comparative Example; "ammonium sulfate" is replaced with "ammonium bicarbonate"; "the mass of ammonium sulfate is 0.6% of the mass of the precursor" is replaced with "the mass of ammonium bicarbonate is 3.0% of the mass of the precursor", and other conditions remain unchanged, obtaining the positive electrode material Li_{1.13}Ni_{0.304}Mn_{0.566}O₂.

### Comparative Example 2

The preparation process in this Comparative Example is generally consistent with that of Example 1, except that in step (1), the "the sodium hypochlorite concentration in the reaction system is 0.5 g/L" is replaced with "the sodium hypochlorite concentration in the reaction system is 2.2 g/L", and other conditions remain unchanged, thereby obtaining the precursor; in step (2), the precursor of Example 1 is replaced with the precursor of this Comparative Example; "the mass of ammonium sulfate is 0.6% of the mass of the precursor" is replaced with "the mass of ammonium bisulfate is 1.6% of the mass of the precursor", and other conditions remain unchanged, obtaining the positive electrode material Li_{1.131}Ni_{0.304}Mn_{0.565}O₂.

### Comparative Example 3

The preparation process in this Comparative Example is generally consistent with that of Example 1, except that in step (1), no sodium hypochlorite is added to the reaction system, and other conditions remain unchanged, thereby obtaining the precursor; in step (2), the precursor of Example 1 is replaced with the precursor of this Comparative Example, no ammonium sulfate is added, and other conditions remain unchanged, obtaining the positive electrode material Li_{1.129}Ni_{0.307}Mn_{0.563}O₂.

### Comparative Example 4

The preparation process in this Comparative Example is generally consistent with that of Example 1, except that in step (1) "the metal salt solution is a sulfate solution containing nickel and manganese (the molar ratio of nickel to manganese is 35:65)" is replaced with "the metal salt solution is a sulfate solution containing nickel, cobalt, and manganese (the molar ratio of nickel, cobalt, and manganese is 30:10:60)"; "the sodium hypochlorite concentration in the reaction system is 0.5 g/L" is replaced with "the sodium hypochlorite concentration in the reaction system is 2.4 g/L", and other conditions remain unchanged to obtain a precursor; in step (2), the precursor of Example 1 is replaced with the precursor of this Comparative Example; "ammonium sulfate" is replaced with "ammonium carbonate"; "the mass of ammonium sulfate is 0.6% of the mass of the precursor" is replaced with "the mass of ammonium carbonate is 2.3% of the mass of the precursor", and other conditions remain unchanged, obtaining the positive electrode material Li_{1.130}Ni_{0.26}Co_{0.089}Mn_{0.521}O₂.

### Comparative Example 5

The preparation process in this Comparative Example is generally consistent with that of Example 1, except that in step (1) "the metal salt solution is a sulfate solution containing nickel and manganese (the molar ratio of nickel to manganese is 35:65)" is replaced with "the metal salt solution is a sulfate solution containing nickel, cobalt, and manganese (the molar ratio of nickel, cobalt, and manganese is 30:10:60)"; no sodium hypochlorite is added to the reaction system, and other conditions remain unchanged to obtain a precursor; in step (2), the precursor of Example 1 is replaced with the precursor of this Comparative Example, no ammonium sulfate is added, and other conditions remain unchanged, obtaining the positive electrode material Li_{1.129}Ni_{0.261}Co_{0.088}Mn_{0.523}O₂.

### Test Example

### 1. Porosity measurement

The positive electrode material is polished with a cross-section polisher and photographed under a scanning electron microscope; then ImageJ software is used to quantitatively analyze the gray scale of the positive electrode material profile. Specifically, RGB threshold is first set to 90 to obtain an area ratio of a region of the RGB range of 0-90 in the positive electrode material image, recorded as X1; similarly, the area ratio of a region of the RGB range of 0-252 in the positive electrode material image is recorded as X2, obtaining the cross-sectional porosity of the positive electrode material = X1/ X2×100%.

The average porosity of the positive electrode material is obtained by measuring the average of the porosity measurements of 20 or more secondary particles from the sample.

### 2. Particle size measurement

Dₘᵢₙ represents that in the volume-based particle size distribution, the particle size of the positive electrode material particles at which the cumulative volume distribution reaches 0% when started from the small particle side is Dₘᵢₙ; D₅₀ represents that in the volume-based particle size distribution, the particle size of the positive electrode material particles at which the cumulative volume distribution reaches 50% when started from the small particle side is D₅₀.

### 3. Energy density

The energy density recorded in Table 1 is the volume energy density of the positive electrode material coated on the positive electrode plate, i.e., average discharge voltage × specific capacity × electrode sheet compaction density.

### 4. Electrochemical performance test

The positive electrode material, the conductive agent Super-P and the binder PVDF are mixed at a mass ratio of 92:4:4, an appropriate amount of NMP solution is added to form a slurry; the slurry is coated on aluminum foil, dried and baked in a vacuum oven at 150°C for 12 hours; and then a secondary battery is assembled in an Ar atmosphere glove box, where, metal lithium is used as a negative electrode and 1mol/L LiPF6 is dissolved in a mixed organic solvent with a volume ratio of EC:EMC=3:7 to obtain an electrolyte, thereby assembling into a button-type CR2032 battery.
(1) 0.1C specific capacity and discharge voltage: the battery is discharged at a current density of 0.1C = 23 mAg⁻¹ from a fully charged voltage of 4.55V to a voltage of 2.5V; the corresponding capacity obtained is the 0.1C discharge specific capacity; and the average discharge voltage of 0.1C discharge is obtained by the specific energy/specific capacity of 0.1C discharge.
(2) 2.0 C specific capacity: the battery is discharged at a current density of 2.0C = 460 mAg⁻¹, from a fully charged voltage of 4.55 V to a voltage of 2.5 V; the corresponding capacity obtained is the 2.0C discharge specific capacity.
(3) 2C/0.1C capacity retention rate: the 2C/0.1C capacity retention rate is the ratio of the 2.0C discharge specific capacity in (2) to the 0.1C discharge specific capacity in (1).
(4) 200-cycle energy retention rate: 200 cycles are performed using a charging and discharging method of 0.5C/1.0C. The percentage of a discharge specific energy in the 200th cycle relative to a discharge specific energy in the first cycle is the 200-cycle energy retention rate.
(5) Average porosity increase rate of post-cycling profile (%): 200 cycles are performed using a charging and discharging method of 0.5C/1.0C. The average porosity of the material profile before cycling is denoted as P, and the average porosity of the material profile after cycling is denoted as Q; and then the average porosity increase rate of post-cycling profile is calculated as (Q-P)/P×100%.

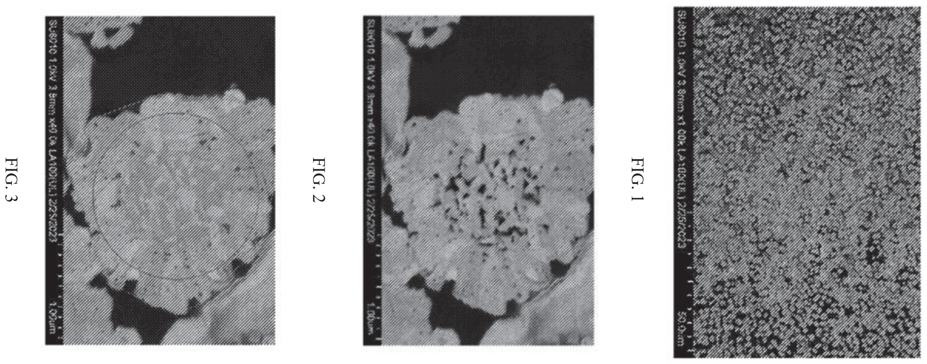

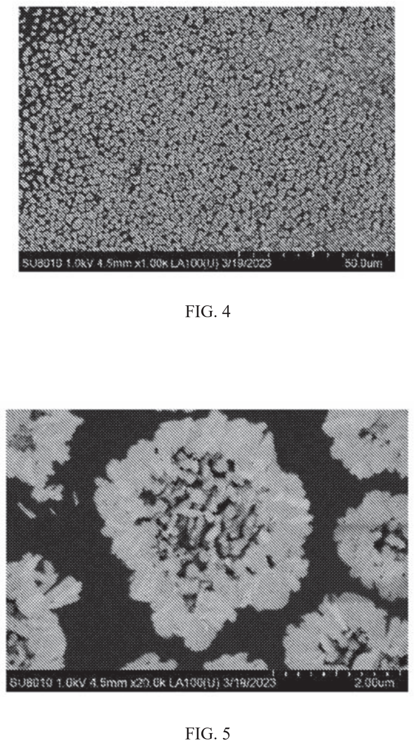

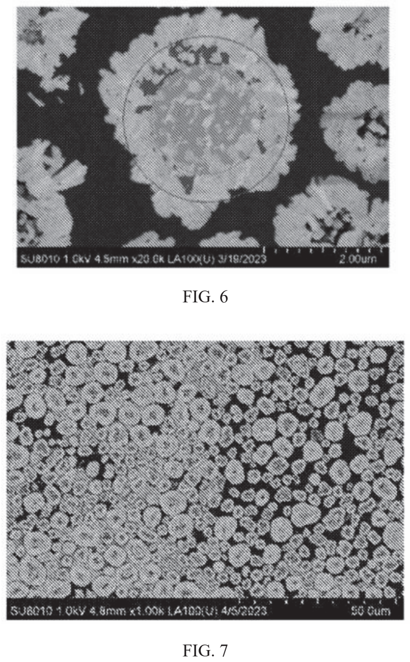

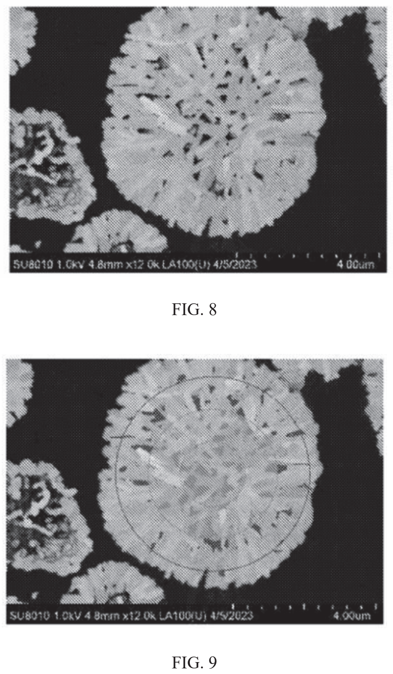

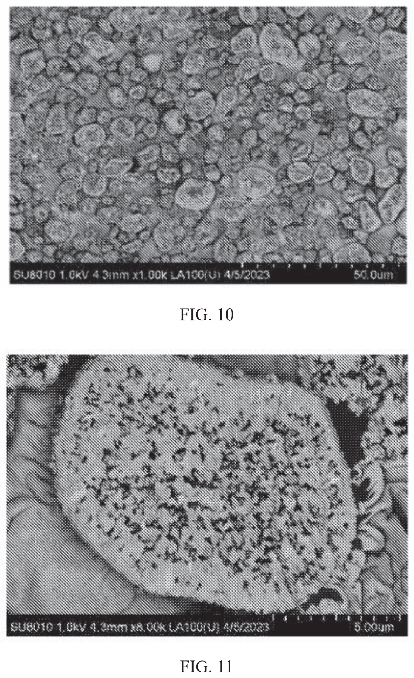

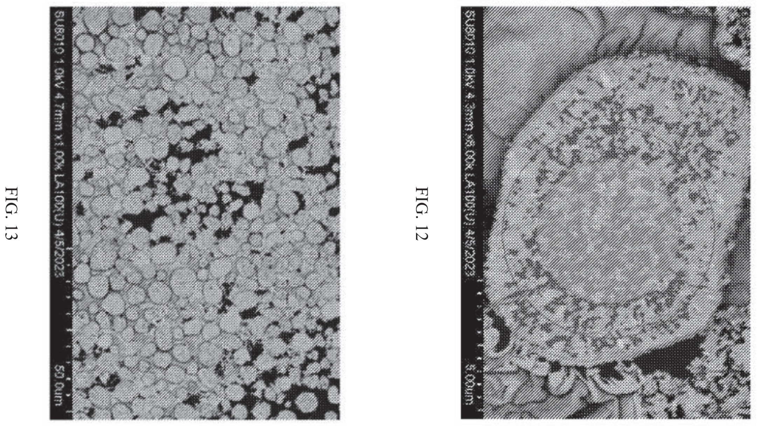

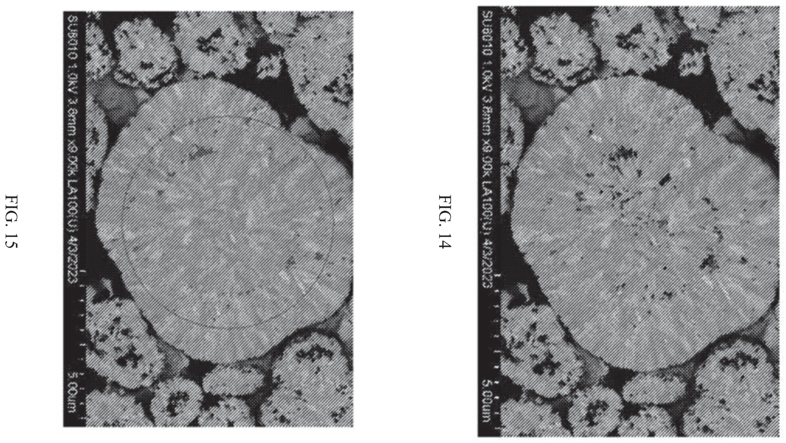

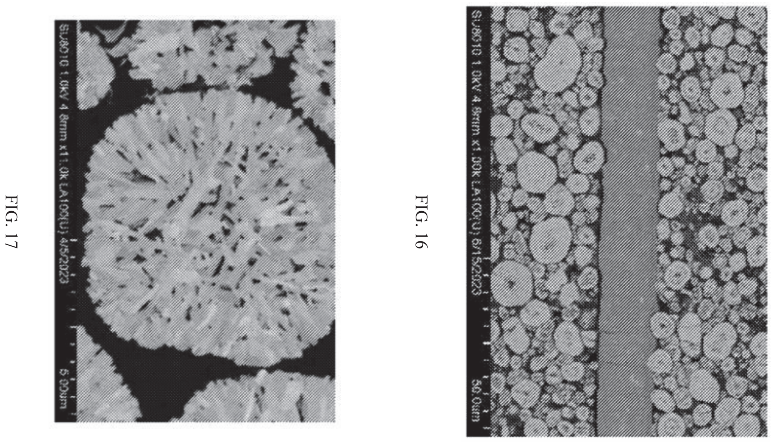

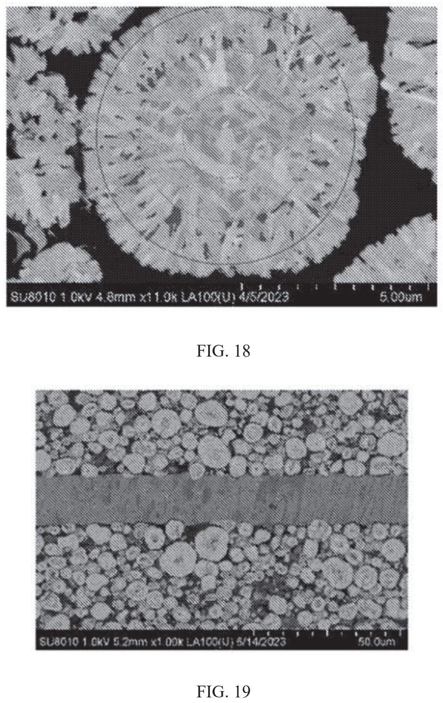

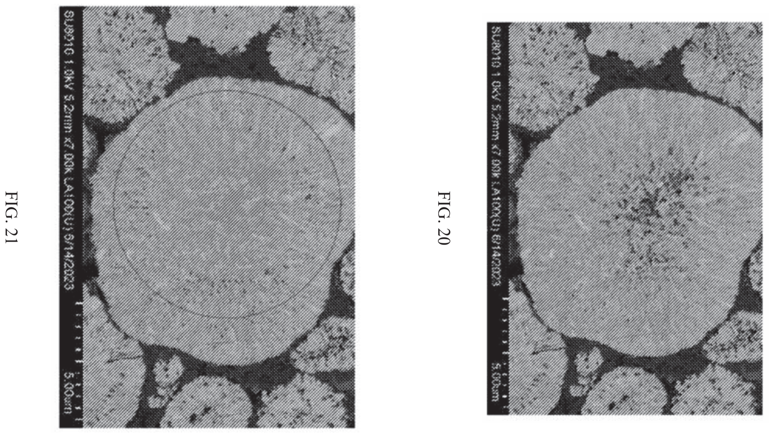

The SEM test refers to FIG. 1 to FIG. 21, and the test results are shown in Table 1.

**Table 1**

| Group | Dv₅₀ α/ µm | Avera ge porosi ty β% | Lithiu m-rich amou nt γ (x - 2y) | δ | Positi ve electr ode sheet compa ction densit γ (g/cm ^{3 )} | Dvₘᵢₙ | Avera ge thickn ess of primar y particl c (nm) | 0.1 C Specif ic capaci ty (mAh g-¹) | 0.1 C Discharg c voltage (V) | 0.1 C Energy density (WhL-¹ ) | 2.0 C Specific capacity (mAhg-¹ ) | 2C/0.1 C Capac ity retenti on ratio ( % ) | 200-c ycle energ y retenti on rate (%) | 200-c ycle averag c porosi ty increa sc rate (%) | Avera ge porosi ty increa se rate of post-c ycling profile (%) |
|---|---|---|---|---|---|---|---|---|---|---|---|---|---|---|---|
| Example 1 | 3.23 | 7.53 | 0.13 | 2.13 | 2.76 | 0.83 | 130 | 231.5 | 3.8 | 2270.6 | 202.56 | 88.5 | 95.3 | 0.9 | 0.9 |
| Example 2 | 6.58 | 9.32 | 0.131 | 1.66 | 2.92 | 1.25 | 108 | 228.3 | 3.81 | 2539.88 | 196.57 | 86.1 | 95.8 | 0.7 | 0.7 |
| Example 3 | 10.54 | 12.58 | 0.13 | 2.30 | 3.12 | 1.65 | 210 | 226.6 | 3.82 | 2700.71 | 191.7 | 84.6 | 96.2 | 1 | 1.0 |
| Example 4 | 6.55 | 12.75 | 0.203 | 3.31 | 2.96 | 1.02 | 126 | 235.6 | 3.73 | 2601.21 | 198.61 | 84.3 | 96 | 1.5 | 1.5 |
| Example 5 | 9.01 | 11.47 | 0.091 | 3.19 | 3.05 | 0.86 | 95 | 219.4 | 3.86 | 2583 | 189.34 | 86.3 | 94.6 | 1.2 | 1.2 |
| Example 6 | 10.09 | 11.56 | 0.131 | 1.56 | 3.13 | 0.95 | 102 | 236.3 | 3.76 | 2780.97 | 199.67 | 84.5 | 94.8 | 0.9 | 0.9 |
| Example 7 | 6.55 | 9.78 | 0.13 | 2.16 | 2.95 | 0.98 | 116 | 227.5 | 3.81 | 2556.99 | 195.2 | 85.8 | 96.3 | 0.8 | 0.8 |
| Example 8 | 6.66 | 9.72 | 0.13 | 2.03 | 2.96 | 1.23 | 134 | 227.8 | 3.81 | 2569.04 | 195.68 | 85.9 | 96.5 | 1.6 | 1.6 |
| Example 9 | 6.52 | 9.79 | 0.129 | 2.22 | 2.96 | 1.50 | 166 | 226.9 | 3.81 | 2558.89 | 194 | 85.5 | 97.1 | 0.7 | 0.7 |
| Example 10 | 6.59 | 9.71 | 0.129 | 2.09 | 2.93 | 1.02 | 128 | 227.2 | 3.81 | 2536.3 | 193.57 | 85.2 | 97.5 | 1.3 | 1.3 |
| Comparativ e Example 1 | 3.28 | 20.3 | 0.13 | 14.86 | 2.53 | 0.38 | 65 | 233.2 | 3.76 | 2218.38 | 192.39 | 82.5 | 91.6 | 5.3 | 5.3 |
| Comparativ e Example 2 | 6.64 | 14.5 | 0.131 | 6.8 | 2.75 | 0.52 | 85 | 230.1 | 3.78 | 2391.89 | 189.14 | 82.2 | 92.5 | 8.9 | 8.9 |
| Comparativ e Example 3 | 6.47 | 5.53 | 0.129 | 2.01 | 3.06 | 0.86 | 280 | 212.9 | 3.82 | 2488.63 | 169.47 | 79.6 | 92.3 | 13.2 | 13.2 |
| Comparativ e Example 4 | 10.09 | 18.51 | 0.13 | 8.533 | 2.76 | 0.35 | 62 | 238.8 | 3.75 | 2471.58 | 196.77 | 82.4 | 90.5 | 6.8 | 6.8 |
| Comparativ e Example 5 | 10.21 | 8.46 | 0.129 | 1.63 | 3.23 | 1.25 | 265 | 222.3 | 3.78 | 2714.15 | 178.95 | 80.5 | 88.6 | 15.6 | 15.6 |

From Table 1, it can be seen that all Examples satisfy δ=β-[2α+75γ]/3 and 0≤δ≤4.0, and the 2C/0.1 C capacity retention rate of the Examples is above 84%, and the 200-cycle energy retention rate is above 94%, both of which are higher than that of the Comparative Example; the average porosity increase rate of the positive electrode material of the Examples after cycling for 200 cycles is less than 2%, which is far lower than that of the Comparative Examples. In addition, the compaction density, specific capacity, discharge voltage, and energy density of the positive electrode sheet in the Examples are comparable to those of the Comparative Examples, and even higher than those of the Examples. It can be seen that by matching the average particle size, lithium content, and average porosity each other, the positive electrode material provided by the present application can maximize the specific capacity, rate performance, cycle performance, and long cycle life of lithium-ion batteries prepared from the positive electrode material, and in particular, can improve the electrochemical performance under high voltage conditions.

Better embodiments and experimental verification of the present application are described in detail above. It should be understood that many modifications and variations can be made in accordance with the concepts of the present application without creative effort by those skill in the art. Therefore, any technical solution that can be obtained by a person skilled in the art through logical analysis, reasoning, or limited experiment based on the prior art according to the concept of the present application should be within the scope of protection determined by the claims.

## Claims

1. A positive electrode material, wherein the positive electrode material has a Dv50 value of α, with a unit of µm; a lithium-rich amount of the positive electrode material is γ; an average porosity of the positive electrode material is denoted as β% in percentage, and wherein α, β, and γ satisfy δ=β-[2α+75γ]/3, and 0≤δ≤4.0.

2. The positive electrode material according to claim 1, wherein the positive electrode material comprises a secondary particle and a coating layer covering at least a part of a surface of the secondary particle.

3. The positive electrode material according to claim 2, wherein a total molar amount of elements distributed in a cationic form in the secondary particle is A, a total molar amount of elements distributed in an anionic form in the secondary particle is B, and A and B satisfy: 0.985≤A/B≤1.0.

4. The positive electrode material according to claim 3, wherein the secondary particle comprise a doping metal element distributed in the cationic form, a doping non-metal element distributed in the anionic form;
wherein a molar ratio of the doping metal element to other element distributed in the cationic form in the secondary particle except for a lithium ion is not higher than 5%; and/or,
a molar ratio of the doping non-metal element to the sum of elements distributed in the anionic form in the secondary particle is not higher than 10%.

5. The positive electrode material according to any one of claims 2-4, wherein a chemical formula of the secondary particle is Li_{1+x-2y}M_{z}M'_{1-x-z}O_{2-y-t}Rₜ, wherein M is NiₐCo_{b}Mn_{c}, a+b+c=1.0, 0<b<0.10, a≥2b, 1.5≤c/(a+b)≤3.0, x=(c-a)/(2+c-a), 0.985≤(2-2y)/(2-y)≤1.0, (19-19x)/20≤z≤(1-x), 0≤t≤(2-y)/10; and
wherein M' is the doping metal element and R is the doping non-metal element.

6. The positive electrode material according to claim 5, wherein the M' comprises at least one of Cr, Mo, W, Ta, Nb, P, Sb, Te, Hf, Ce, Ti, Zr, Sn, La, Al, Mg, Fe, K, and Na; and/or,
R comprises at least one of F and S.

7. The positive electrode material according to any one of claims 2-6, wherein the positive electrode material has a Dv50 of 2.5-10.6 µm; and/or,
a minimum particle diameter Dvₘᵢₙ of the positive electrode material is not less than 0.6 µm; and/or,
the secondary particle is formed by agglomeration of primary particles, and an average thickness of the primary particles is 80-250 nm; and/or,
a specific surface area of the secondary particle is not less than 0.5 m²/g and not more than 1.5 m²/g; and/or,
β is 7-13; and/or,
the lithium-rich amount γ is 0.09-0.21.

8. The positive electrode material according to any one of claims 2-7, wherein a ratio of a molar amount of a coating layer material to a total molar amount of the positive electrode material is (0.2-1.0): 100; and/or,
a coating layer material is phosphate and/or inert oxide, the phosphate comprises at least one of AlPO₄ and LaPO₄, and the inert oxide comprises at least one of Al₂O₃, TiO₂, ZrO₂, and La₂O₃.

9. A preparation method for the positive electrode material according to any one of claims 1-8, comprising the following steps:
mixing a metal salt solution, an alkali solution, and an oxidant to obtain a reaction system, making the reaction system undergo precipitation reaction to obtain a precursor; wherein the oxidant comprises sodium hypochlorite, and a concentration of the oxidant in the reaction system is 0.2-2 g/L;
mixing a precursor, a lithium salt, and a pore-forming agent to obtain a first mixture, and subjecting the first mixture to a first sintering treatment to obtain the positive electrode material.

10. The preparation method according to claim 9, wherein the first mixture further comprises a compound containing a doping element; and/or,
after the first sintering treatment, the method further comprises: mixing a first sintering treatment product with a coating layer material to obtain a second mixture, and subjecting the second mixture to a second sintering treatment to obtain the positive electrode material.

11. The preparation method according to claim 10, wherein the precipitation reaction has a condition of: a stirring speed of 700-800rpm, a temperature of 50-70°C, and pH 9.5-11.5;
the first sintering treatment has a temperature of 800-950°C and a holding time of 10-15h; and/or,
the coating layer material comprises inert oxide, and the second sintering treatment has a temperature of 500-800°C, a heating rate of 5-10°C/min and a holding time 5-10h; and/or,
the coating layer material comprises phosphate, and the second sintering treatment has a temperature of 700-900°C, a heating rate of 5-10°C/min, and a holding time is 5-10h.

12. The preparation method according to any one of claims 9-10, wherein a mass of the pore-forming agent is 0.1 wt% to 1.0 wt% of a mass of the precursor;
the pore-forming agent comprises at least one of ammonium carbonate, ammonium sulfate, ammonium persulfate, ammonium nitrate, and ammonium chloride.

13. A positive electrode sheet comprising the positive electrode material according to any one of claims 1-8 or a positive electrode material prepared by the preparation method according to any one of claims 9-12.

14. The positive electrode sheet according to claim 13, wherein the positive electrode sheet comprises a current collector, and a positive electrode active material layer located on at least one functional surface of the current collector;
the positive electrode active material layer comprises the positive electrode material according to any one of claims 1-8, a conductive agent, and a binder, wherein a ratio of a mass of the positive electrode material to a total mass of the positive electrode active material layer is not less than 94 wt%.

15. A lithium-ion battery comprising the positive electrode sheet according to claim 13.

16. The lithium-ion battery according to claim 15, wherein the lithium-ion battery further comprises a separator, a negative electrode sheet, and an electrolyte;
the negative electrode sheet is selected from at least one of a lithium sheet, graphite, and a silicon-carbon negative electrode.

17. The lithium-ion battery according to claim 15 or 16, wherein an increase rate of average porosity of the positive electrode material on the positive electrode sheet is less than 2% after the lithium-ion battery is cycled under charge and discharge conditions of 2.5-4.5 V and 0.5 C/1.0C for 200 cycles.

18. An electrical device comprising the lithium-ion battery according to any one of claims 15-17, preferably, the electrical device comprises an electric vehicle, a manned electric aircraft, or an unmanned aerial vehicle.
